# EUROPEAN PATENT APPLICATION

(11) **EP 3 045 300 A1**
(43) Date of publication of application: **20.07.2016**
(21) Application number: 15151270.4
(22) Date of filing: 15.01.2015
(51) Int. Cl.: B29D 24/00, B29D 99/00, B29C 67/00

(54) **Stiffening component and method for manufacturing a stiffening component**

(71) Applicant: Airbus Operations GmbH, 21129 Hamburg (DE)
(72) Inventor: Robrecht, Volker, 21129 Hamburg (DE); Ruppert, Bernd, 21129 Hamburg (DE); Schneemann, Julian, 21129 Hamburg (DE)
(74) Representative: Isarpatent

(57) **Abstract**

A component (20, 40, 60, 80) includes a plurality of elementary units (10, 30, 50, 70) arranged in a regular pattern to form a mesoscopic geometrical structure, wherein each of the plurality of elementary units (10, 30, 50, 70) has the shape of a hollow polyhedron. A method for manufacturing such a component (20, 40, 60, 80) includes manufacturing a plurality of elementary units (10, 30, 50, 70) in a regular pattern to form a mesoscopic geometrical structure using an AM or 3D printing technique.

## Description

The present invention relates to a stiffening component and a method for manufacturing a stiffening component, in particular by using additive layer manufacturing (ALM), fused deposition modelling (FDM), selective laser sintering (SLS) and/or solid freeform fabrication (SFF) processes.

In contemporary aircraft and spacecraft fibre reinforced composite structures are commonly employed which may include core structures sandwiched between outer sheets in order to increase the stiffness of the resulting component, insulate the component or simply to provide stabilization and support in the third dimension. Such core structures are usually designed as porous or hollow structures by including void, empty cells or air pockets within the material making up the core structure. By providing non-solid core structures the weight of the overall component may be reduced, thus reducing aircraft load and, in consequence, fuel consumption of the aircraft, thereby diminishing the costs and ecological footprint of operating the aircraft.

In order to create components with sandwich-type core structures, stiffening structures with ribs in regular geometries, such as honeycomb cell structures, are currently assembled in complex assembly procedures. The rib structures are designed in a manner to increase resistance to impact and optimize impact energy absorption of the component. Crystalline morphological structures are hitherto difficult to manufacture.

Nattapon Chantarapanich, Apinya Laohaprapanon, Sirikul Wisutmethangoon, Pongnarin Jiamwatthanachai, Prasert Chalermkarnnon, Sedthawatt Sucharitpwatskul, Puttisak Puttawibul, and Kriskrai Sitthiseripratip: "Fabrication of three-dimensional honeycomb structure for aeronautical applications using selective laser melting: a preliminary investigation", Rapid Prototyping Journal 2014, vol. 20, no. 6, pages 551-558 discloses design and production of a three-dimensional honeycomb based on selective laser melting technique for use in aeronautical application.

Document Oscar Efrain Sotomayor Gálvez: "Numerical Modeling of Random 2D and 3D Structural Foams Using Voronoi Diagrams: A Study of Cell Regularity and Compression Response", Master's Thesis, 2013, available under "http://www.eng.auburn.edu/~htippur/master's%20thesis%20version%2029_black_ yelow_pages.pdf", discloses methods for producing Voronoi honeycombs with Additive Manufacturing.

One object of the invention is therefore to provide solutions for components, particularly components used in aviation and avionics, which employ a lightweight design approach for reduced system weight of aircraft and spacecraft, while maintaining intended stiffness, stability and impact resistance of the component.

This object is achieved by a component having the features of claim 1 and a method for manufacturing a component having the features of claim 10.

A first aspect of the invention pertains to a component, comprising a plurality of elementary units arranged in a regular pattern to form a mesoscopic geometrical structure, wherein each of the plurality of elementary units has the shape of a hollow polyhedron.

According to a second aspect of the invention, a method for manufacturing a component comprises manufacturing a plurality of elementary units in a regular pattern to form a mesoscopic geometrical structure using an AM or 3D printing technique.

The idea on which the present invention is based is to design a lightweight component through mimicking crystal morphology. Stiffening components may therefore be produced as mesoscopic geometric structure made up from microscopic hollow elementary units which are designed as regular hollow polyhedra. The hollow elementary units are arranged in a regular or semi-regular pattern, thereby modelling the mesoscopic geometric structure of the component.

Using 3D printing processes, particularly Fused Deposition Modelling (FDM) techniques or Powder Bed Fusion (PBF) techniques, those stiffening components may be manufactured as integral object in cost and time efficient production manner. In both cases, the amount of material needed for forming the elementary units of the stiffening components is minimized. Thus, a component manufactured in such a way offers advantageous savings in weight, which is specifically advantageous in aviation and avionics.

In general, the solution of the invention offers great advantages for 3D printing or additive manufacturing (AM) technology since 3D components may be printed without the additional need for subjecting the components or objects to further processing steps such as milling, cutting or drilling. This allows for a more efficient, material saving and time saving manufacturing process for objects.

Particularly advantageous in general is the reduction of costs, weight, lead time, part count and manufacturing complexity coming along with employing AM technology for printing structural components or other objects used for, employed in or being part of airborne vehicles. It may also be possible to employ such structural components in landborne vehicles such as automobiles or railroad vehicles as well as in seaborne vehicles, for example submarines, boats or ships. Moreover, the geometric shape of the printed structural components or objects may be flexibly designed with regard to the intended technical purpose of parts or regions of the component/object.

The stiffening components obtained by such a manufacturing method are particularly advantageous with respect to their resemblance of crystalline morphological structures that exhibit mechanical characteristics with high stability and an optimum ratio of weight to stiffness. Such components are very suitable for implementation of crash or impact absorbers and support elements of structural components in aircraft and spacecraft.

According to an embodiment of the component, each of the plurality of elementary units may have the outer shape of a regular, convex polyhedron, particularly the outer shape of one of a truncated octahedron, a non-truncated octahedron, a tetrahedron, a double tetrahedron, a polygonal prism, a dodecahedron, an icosaheadron, an icosidodecahedron, a deltahedro and a cube.

According to a further embodiment of the component, each of the plurality of elementary units may comprise at least one hole in the outer wall of the polyhedron shape. This particularly applies for powder bed applications and liquid printing applications where the unsolidified powder should advantageously be removable from the printed structure after printing. For fused deposition modelling applications, such holes may not be necessary since there is no remaining material left within the component after printing.

According to a further embodiment of the component, the elementary units may be assembled in a regular pattern obtained only by translatory repositioning of the elementary units.

According to a further embodiment of the component, a first subset of the plurality of elementary units may have a first polyhedron size and a second subset of the plurality of elementary units may have a second polyhedron size different from the first polyhedron size.

According to a further embodiment of the component, the hollow polyhedra may have an outer wall of predetermined constant thickness enclosing a hollow within the polyhedral shape of the elementary units.

According to a further embodiment of the component, each surface of each one of the plurality of elementary units facing inwards towards the inner region of the mesoscopic geometric structure may border an inward facing surface of a neighbouring one of the plurality of elementary units.

According to a further embodiment of the component, each of the plurality of elementary units may be integrally manufactured using an AM or 3D printing technique.

According to an embodiment of the method, the step of manufacturing may be performed with a 3D printing process, the 3D printing process particularly comprising fused deposition modelling, FDM, or powder bed printing, PBP

In the case of PBP, the method may further comprise in a further embodiment drilling a hole in the outer wall each of the plurality of elementary units, and removing unsolidified powder from the hollow space within each of the plurality of elementary units through the hole in the outer wall.

According to a further embodiment of the method, the method may further comprise embedding the mesoscopic geometrical structure within two or more sheet components to form a stiffened component.

A computer-readable medium according to a further aspect of the invention may comprise computer-executable instructions which, when executed on a data processing apparatus, cause the data processing apparatus to perform the method according to the invention.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates an exemplary elementary unit in isometric view according to an embodiment of the invention.
Fig. 2 schematically illustrates a mesoscopic component structure including elementary units of Fig. 1 according to a further embodiment of the invention.
Fig. 3 schematically illustrates another exemplary elementary unit in isometric view according to another embodiment of the invention.
Fig. 4 schematically illustrates a mesoscopic component structure including elementary units of Fig. 3 according to a further embodiment of the invention.
Fig. 5 schematically illustrates another exemplary elementary unit in isometric view according to another embodiment of the invention.
Fig. 6 schematically illustrates a mesoscopic component structure including elementary units of Fig. 5 according to a further embodiment of the invention.
Fig. 7 schematically illustrates another exemplary elementary unit in isometric view according to another embodiment of the invention.
Fig. 8 schematically illustrates a mesoscopic component structure including elementary units of Fig. 7 according to a further embodiment of the invention.
Fig. 9 schematically illustrates a flow diagram of a method for manufacturing a component according to another embodiment of the invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

Additive layer manufacturing (ALM), selective laser sintering (SLS) and solid freeform fabrication (SFF) techniques, generally termed as 3D printing techniques, may be used in procedures for building up three-dimensional solid objects based on digital model data. 3D printing is currently used for prototyping and distributed manufacturing with multiple applications in engineering, construction, industrial design, automotive industries and aerospace industries.

Free form fabrication (FFF), direct manufacturing (DM), fused deposition modelling (FDM), powder bed printing (PBP), laminated object manufacturing (LOM), stereolithography (SL), selective laser sintering (SLS), selective laser melting (SLM), selective heat sintering (SHS), electron beam melting (EBM), direct ink writing (DIW), digital light processing (DLP) and additive layer manufacturing (ALM) belong to a general hierarchy of additive manufacturing (AM) methods. Those systems are used for generating three-dimensional objects by creating a cross-sectional pattern of the object to be formed and forming the three-dimensional solid object by sequentially building up layers of material. Any of such procedures will be referred to in the following description as AM or 3D printing without loss of generality. AM or 3D printing techniques usually include selectively depositing material layer by layer, selectively fusing or solidifying the material and removing excess material, if needed.

Powder bed printing (PBP) processes within the meaning of the present disclosure specifically comprise any additive manufacturing processes using metal, ceramic, polymer, and composite powder materials which induce fusion of particles by exposing them to one or more sources of thermal energy, such as generally laser, electron beam or infrared sources. Fused Deposition Modelling (FDM) processes within the meaning of the present disclosure comprise processes used to build a three-dimensional part or component from a digital representation of the three-dimensional part by extruding flowable material layer-by-layer and depositing the material as a sequence of tracks on previously deposited material, so that upon a drop in temperature the deposited material of the tracks fuses with the previously deposited material.

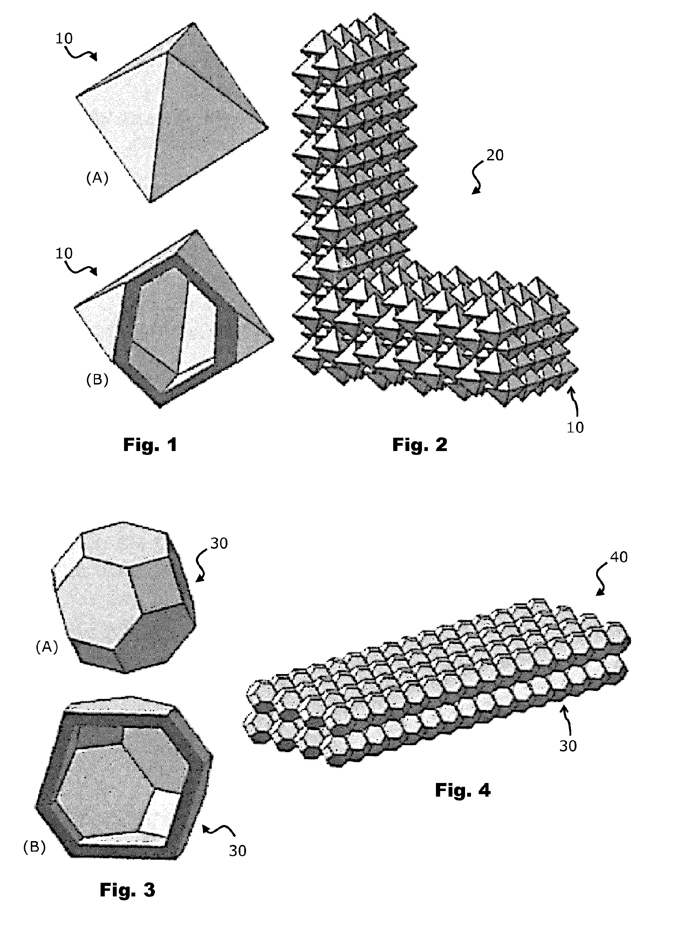

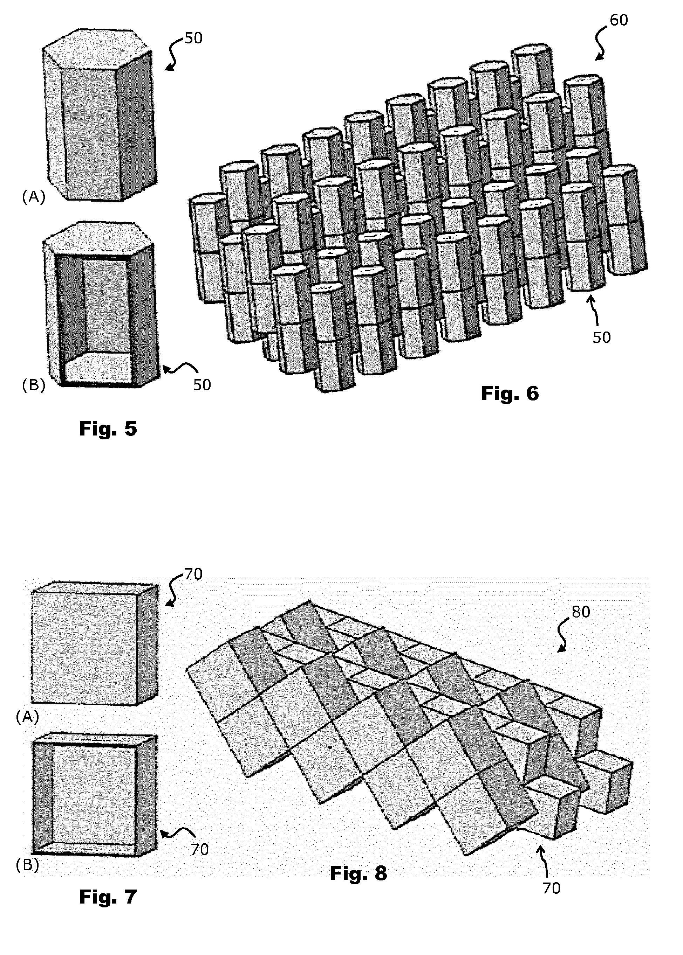

Fig. 1 schematically illustrates an exemplary elementary unit 10 of a stiffening component, both in exterior view (A) as well as in cutaway view (B). The exemplary elementary unit 10 may for example be used in a stiffening component 20 such as the one exemplarily shown in Fig. 2. Fig. 3 schematically illustrates another exemplary elementary unit 30 of a stiffening component, both in exterior view (A) as well as in cutaway view (B). The exemplary elementary unit 30 may for example be used in a stiffening component 40 such as the one exemplarily shown in Fig. 4. Fig. 5 schematically illustrates another exemplary elementary unit 50 of a stiffening component, both in exterior view (A) as well as in cutaway view (B). The exemplary elementary unit 50 may for example be used in a stiffening component 60 such as the one exemplarily shown in Fig. 6. Fig. 7 schematically illustrates another exemplary elementary unit 70 of a stiffening component, both in exterior view (A) as well as in cutaway view (B). The exemplary elementary unit 70 may for example be used in a stiffening component 80 such as the one exemplarily shown in Fig. 8.

All the exemplary elementary units 10, 30, 50 and 70 may be integrally manufactured using an AM or 3D printing technique. Particularly, the complete final mesoscopic geometric structure of the component may be 3D printed in a singular printing session. The exemplary elementary units 10, 30, 50 and 70 may in particular be fabricated integrally from any material suitable for an AM or 3D printing technique, particularly Powder Bed Printing or Fused Deposition Modelling. It should be clear to the person skilled in the art that the mesoscopic geometrical structures 20, 40, 60 and 80 as depicted in Figs. 2, 4, 6 and 8 are merely exemplary and that other mesoscopic geometrical structures than the ones specifically depicted may be built up from the microscopic elementary units 10, 30, 50 and 70 as well.

Particularly, the exemplary elementary units 10, 30, 50 and 70 may be formed as hollow polyhedra with an outer wall of predetermined, particularly constant, thickness in the shape of a polyhedron enclosing a hollow or void within the polyhedral shape of the elementary unit. The geometric shapes of the elementary units 10, 30, 50 and 70 may particularly be regular and convex polyhedra, i.e. polyhedra the faces, edges and vertices of which do not intersect themselves, with line segments joining any two points of the polyhedron being contained in the interior of the outer surface of the polyhedron. More specifically, the elementary units 10, 30, 50 and 70 may have the outer shape of Platonic solids, Archimedean solids or Catalan solids.

Examples of polyhedra being used to form the outer geometric shape of the elementary units 10, 30, 50 and 70 may comprise truncated and non-truncated octahedra, tetrahedra, double tetrahedra, polygonal prisms, dodecahedra, icosaheadra icosidodecahedra, deltahedra and cubes.

The elementary units 10, 30, 50 and 70 may be arranged in a regular pattern to form the mesoscopic geometric shape of the stiffening component 20, 40, 60 or 80. To that end, the elementary units 10, 30, 50 and 70 may all be aligned along a common alignment direction, i.e. the elementary units 10, 30, 50 and 70 may be assembled in a pattern obtained only by translatory repositioning of the elementary units 10, 30, 50 and 70. It may be possible to use elementary units 10, 30, 50 and 70 of common size for manufacturing the mesoscopic geometric shape of the stiffening component 20, 40, 60 or 80. Alternatively, it may be possible to use two or more sets of elementary units 10, 30, 50 and 70 of differing size that are aligned in a regular pattern with respect to each other. The arrangement of the elementary units 10, 30, 50 and 70 may be designed in such a manner that each surface of each elementary unit 10, 30, 50 and 70 facing inwards towards the inner region of the mesoscopic geometric structure borders an inward facing surface of a neighbouring elementary unit 10, 30, 50 and 70, i.e. the stiffening component 20, 40, 60, 80 is formed without internal hollows or gaps between the elementary units 10, 30, 50 and 70. Alternatively, it may be possible to leave hollows or gaps between the elementary units 10, 30, 50 and 70 within the pattern assembly of the stiffening components 20, 40, 60, 80. In that manner, the density of the stiffening component 20, 40, 60, 80 may be adjusted as desired.

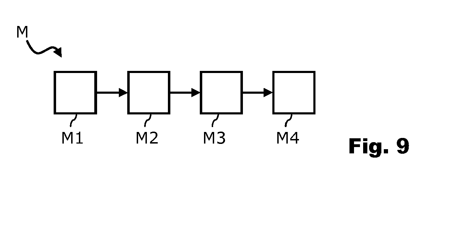

Fig. 9 shows a schematic illustration of a flow diagram of a method M for manufacturing a component, such as for example the stiffening components 20, 40, 60 or 80 as depicted in Figs. 2, 4, 6 and 8, respectively. At M1, a plurality of elementary units are manufactured using an AM or 3D printing technique, for example fused deposition modelling, FDM, or powder bed printing, PBP The plurality of elementary units are arranged in a regular pattern to form a mesoscopic geometrical structure to obtain a stiffening component such as the components 20, 40, 60, 80 as exemplarily illustrated in conjunction with Figs. 1 to 8. The mesoscopic geometrical structure may be printed "in one go", i.e. the whole component may be integrally printed in a single printing procedure.

The FDM printing technique is particularly appealing for any polyhedral microscopic structures that do not have inherent overhang angles or undercuts above a predetermined manufacturing threshold, such as double tetrahedra or octahedra. In that case, FDM provides the opportunity to manufacture the elementary units without the need for additional support material or elements, since the hollow shape of the polyhedra is self-supporting during integral printing. For particular polyhedral microscopic structures, the printing direction may be determined in such a way that no surface encloses an overhang angle above the predetermined manufacturing threshold. For example, cubic structures may be printed with the printing direction oriented along a diagonal line between two diametrally opposite vertices of the cube so that the overhang angle of the surface to be printed will not exceed 45°.

PBP may also be used, for example for any polyhedral microscopic structures having inherent overhang angles or undercuts above a predetermined manufacturing threshold, such as cubes or hexagonal prisms. When applying the PBP technique to print hollow polyhedra the powder within the outer walls of the polyhedral structure is not solidified. After manufacture of each of the elementary units, a hole or via in the outer wall may be drilled in each of the plurality of elementary units at M2. The unsolidified powder may then be removed from the hollow space within each of the plurality of elementary units through the hole in the outer wall at M3. The holes or vias in the outer walls may be kept small enough to not significantly impact the mechanical characteristics of the elementary units, such as stiffness, mechanical stability or resistance to buckling.

Finally, at M4, the method may involve embedding the mesoscopic geometrical structure within two or more sheet components to form a stiffened component. In this manner, sandwich structures with lightweight stiffening cores may be advantageously produced in a cost efficient manner with reduced lead time and little waste of material. The sandwich structures may also be manufactured in a single production step so that an integral component of sheet components with a sandwiched core portion may be produced in an efficient way.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference numerals and signs

- 10: Elementary unit
- 20: Component
- 30: Elementary unit
- 40: Component
- 50: Elementary unit
- 60: Component
- 70: Elementary unit
- 80: Component
- M: Method
- M1: Method step
- M2: Method step
- M2: Method step
- M2: Method step

## Claims

1. Component (20; 40; 60; 80), comprising:
a plurality of elementary units (10; 30; 50; 70) arranged in a regular pattern to form a mesoscopic geometrical structure,
wherein each of the plurality of elementary units (10; 30; 50; 70) has the shape of a hollow polyhedron.

2. Component (20; 40; 60; 80) according to claim 1, wherein each of the plurality of elementary units (10; 30; 50; 70) has the outer shape of a regular, convex polyhedron.

3. Component (20; 40; 60; 80) according to claim 2, wherein each of the plurality of elementary units (10; 30; 50; 70) has the outer shape of one of a truncated octahedron, a non-truncated octahedron, a tetrahedron, a double tetrahedron, a polygonal prism, a dodecahedron, an icosaheadron, an icosidodecahedron, a deltahedro and a cube.

4. Component (20; 40; 60; 80) according to one of the claims 1 to 3, wherein each of the plurality of elementary units (10; 30; 50; 70) comprises at least one hole in the outer wall of the polyhedron shape.

5. Component (20; 40; 60; 80) according to one of the claims 1 to 4, wherein the elementary units (10; 30; 50; 70) are assembled in a regular pattern obtained only by translatory repositioning of the elementary units (10; 30; 50; 70).

6. Component (20; 40; 60; 80) according to one of the claims 1 to 5, wherein a first subset of the plurality of elementary units (10; 30; 50; 70) have a first polyhedron size and a second subset of the plurality of elementary units (10; 30; 50; 70) have a second polyhedron size different from the first polyhedron size.

7. Component (20; 40; 60; 80) according to one of the claims 1 to 6, wherein the hollow polyhedra have an outer wall of predetermined constant thickness enclosing a hollow within the polyhedral shape of the elementary units (10; 30; 50; 70).

8. Component (20; 40; 60; 80) according to one of the claims 1 to 7, wherein each surface of each one of the plurality of elementary units (10; 30; 50; 70) facing inwards towards the inner region of the mesoscopic geometric structure borders an inward facing surface of a neighbouring one of the plurality of elementary units (10; 30; 50; 70).

9. Component (20; 40; 60; 80) according to one of the claims 1 to 8, wherein each of the plurality of elementary units (10; 30; 50; 70) is integrally manufactured using an AM or 3D printing technique.

10. Method (M) for manufacturing a component (20; 40; 60; 80) of one of the claims 1 to 9, the method (M) comprising:
manufacturing (M1) a plurality of elementary units (10; 30; 50; 70) in a regular pattern to form a mesoscopic geometrical structure using an AM or 3D printing technique.

11. Method (M) according to claim 10, wherein the 3D printing technique comprises fused deposition modelling, FDM.

12. Method (M) according to claim 10, wherein the 3D printing technique comprises powder bed printing, PBP

13. Method (M) according to claim 12, further comprising:
drilling (M2) a hole in the outer wall each of the plurality of elementary units (10; 30; 50; 70); and
removing (M3) unsolidified powder from the hollow space within each of the plurality of elementary units (10; 30; 50; 70) through the hole in the outer wall.

14. Method (M) according to one of the claims 10 to 13, further comprising:
embedding (M4) the mesoscopic geometrical structure within two or more sheet components to form a stiffened component; or
integrally printing the mesoscopic geometrical structure with two or more sheet components to form a stiffened component.

15. Computer-readable medium comprising computer-executable instructions which, when executed on a data processing apparatus, cause the data processing apparatus to perform the method according to one of the claims 10 to 14.
